# EUROPÄISCHE PATENTSCHRIFT

(11) **EP 2 282 935 B1**
(45) Veröffentlichungstag und Bekanntmachung des Hinweises auf die Patenterteilung: **14.12.2016**
(21) Anmeldenummer: 09749890.1
(22) Anmeldetag: 20.05.2009
(51) Int. Cl.: B64D 13/00, B64D 37/32

(54) **INERTISIERUNGSSYSTEM FÜR EIN FLUGZEUG**
INERTING SYSTEM FOR AN AIRCRAFT
SYSTÈME D'INERTAGE POUR UN AVION

(30) Priorität: 21.05.2008 DE 102008024503; 21.05.2008 US 128385
(43) Veröffentlichungstag der Anmeldung: 16.02.2011
(73) Patentinhaber: Airbus Operations GmbH, 21129 Hamburg (DE)
(72) Erfinder: CREMERS, Jörg, 22767 Hamburg (DE); KRICKE, Klaus-Dieter, 25421 Pinneberg (DE); SCHUMACHER, Christian, 22880 Wedel (DE)
(74) Vertreter: Kopf Westenberger Wachenhausen Patentanwälte PartG mbB
(86) Internationale Anmeldenummer: PCT/EP2009/056180
(87) Internationale Veröffentlichungsnummer: WO 2009/141400

(56) Entgegenhaltungen:
- EP-A2- 1 580 123
- DE-A1- 4 221 593
- DE-A1-102006 007 286
- US-A1- 2003 233 936

## Beschreibung

### VERWANDTE ANMELDUNGEN

Die vorliegende Anmeldung beansprucht die Priorität der US Provisional Patentanmeldung Nr. 61/128 385, eingereicht am 21. Mai 2008 und der deutschen Patentanmeldung Nr. 10 2008 024 503.8, eingereicht am 21. Mai 2008, deren Inhalte hierin durch Referenz inkorporiert werden.

### TECHNISCHES GEBIET

Die Erfindung betrifft ein Inertisierungssystem und ein Klimatisierungssystem für ein Flugzeug zum Inertisieren eines Treibstofftanks.

### TECHNISCHER HINTERGRUND

Klimatisierungssysteme sind aufgrund der niedrigen Außentemperaturen und des niedrigen Außendrucks in großen Flughöhen ein unverzichtbarer Bestandteil moderner Verkehrsflugzeuge. Nur durch den Einsatz solcher Systeme ist es möglich, Passagiere über größere Entfernungen zu transportieren. Die Architektur von Klimatisierungssystemen ist dabei einem ständigen Anpassungs- und Optimierungsprozess unterworfen. Beispielsweise ist es aufgrund neuer Vorschriften erforderlich, Flugzeuge aus Sicherheitsgründen mit einem Inertisierungssystem zum Erzeugen und Einleiten von Stickstoff in Treibstofftanks zur Verminderung der Explosionsgefahr des Treibstoffs auszurüsten. Derartige Inertisierungssysteme werden auch mit dem englischen Fachbegriff "On Board Inert Gas Generations System" (abgekürzt als "OBIGGS") bezeichnet. Im Rahmen der Optimierung von Klimatisierungssystemen ist bei deren Auslegung gleichermaßen der zum Betrieb erforderliche Kraftstoffmehrverbrauch zu minimieren.

Klimatisierungssysteme mit von Triebwerken entnommener Zapfluft, wie im Dokument US 2003 233 936, sind derzeit am
verbreitetsten. Bei derartigen Klimatisierungssystemen wird die Zapfluft in der Regel je nach Flugsituation an einer von zwei verschiedenen Stellen von einem oder mehreren Triebwerken abgezweigt, etwa einer Mitteldrucköffnung ("Intermediate Pressure Port") und einer Hochdrucköffnung ("High Pressure Port"). Das Verwenden von Zapfluft für die Klimatisierung ist vorteilhaft, da die Zapfluft sowohl einen relativ hohen Druck als auch eine relativ hohe Temperatur aufweist und sich daher auf einen großen Bereich gewünschter Drücke und Temperaturen regulieren lässt. Auf beschriebene Weise entnommene Zapfluft kann auch für andere Verbrauchersysteme, wie zum Beispiel für Enteisungssysteme ("Wing Ice Protection System") oder auch für Inertisierungssysteme verwendet werden.

Alternativ dazu können Inertisierungssysteme auch mit verbrauchter Luft versorgt werden, die der Passagierkabine des Flugzeugs entnommen wird. Die Luft in einer Passagierkabine wird regelmäßig erneuert, indem ihr Frischluft zugeführt und vorhandene Kabinenluft aus ihr abgeführt wird. Ein signifikanter Anteil der aus der Kabine abgeführten Luft wird wiederverwendet, indem er dem zur Kabine geleiteten Frischluftstrom beigemischt wird. Typischerweise beträgt das Verhältnis Frischluft zu rezirkulierter Luft ca. 50 - 60 %. Der Rest der Kabinenluft wird in die Umgebung des Flugzeugs abgelassen, wobei dafür vorgesehene Auslassventile gleichzeitig auch zur Druckregulierung der Kabine verwendet werden.

Ein Inertisierungssystem weist üblicherweise ein Lufttrennungsmodul auf, welches beispielsweise Zeolithmembranen beinhaltet, durch den ein Luftstrom gepresst wird. Aufgrund unterschiedlicher Stofftransportraten für Stickstoff und Sauerstoff ist es damit möglich, den Luftstrom aufzuteilen, so dass ein Luftstrom mit höherem Stickstoffanteil und einem höheren Sauerstoffanteil erhalten werden kann. Der mit Stickstoff angereicherte Luftanteil wird in Treibstofftanks geleitet, so dass der dort vorhandene Sauerstoff verdrängt wird. Der mit Sauerstoff angereicherte Luftanteil wird häufig nicht weiterverwendet oder wird durch aufwändige zusätzliche Maßnahmen aufbereitet in die Passagierkabine geleitet.

Die Leistungsfähigkeit eines Inertisierungssystems ist im Wesentlichen abhängig vom Verhältnis von Eingangs- zu Ausgangsdruck, vom Feuchtigkeitsgrad der Luft, von der Temperatur, der Luftqualität und der Ozonkonzentration. Zur Optimierung des Lufttrennungsprozesses und zum Schutz vor Zerstörung der empfindlichen Membranen wird daher üblicherweise vom Inertisierungssystem eine Konditionierung der Zapfluft durchgeführt, bevor sie die Membranen erreicht. Dafür notwendige Vorrichtungen wie Kompressoren, Filter, Luftkühlungsaggregate, Wasserabscheider und dergleichen sind in das Inertisierungssystem integriert und verursachen entsprechende Kosten, Gewicht und Raumbedarf.

In der US 7172156 B1 wird etwa ein Inertisierungssystem beschrieben, das durch Zapfluft aus Flugzeugtriebwerken versorgt wird. Die Zapfluft wird vor Erreichen des Lufttrennungsmoduls durch Filter und Wärmetauscher vorkonditioniert. Der Stickstoff angereicherte Luftanteil wird zu Treibstofftanks geleitet und der mit Sauerstoff angereicherte Luftanteil wird nach außen in die Umgebung des Flugzeugs abgeführt. Desweiteren beinhaltet das offenbarte Inertisierungssystem einen Kompressor und eine Turbine, die sowohl eine hohe Komplexität als auch ein hohes Gewicht des Inertisierungssystems verursachen.

Die US 2007/0062371 A1 beschreibt ein Inertisierungssystem, welches von gebrauchter Kabinenluft versorgt wird und bei dem der mit Sauerstoff angereicherte Luftteil aus dem Inertisierungssystem in die Kabine zurückgeleitet wird. Die für die Funktion des Inertisierungssystems notwendige Bereitstellung einer Druckdifferenz zwischen Eingangsluftstrom und Ausgangsluftströmen in allen Flugphasen bleibt im Detail jedoch offen. Auf Reiseflughöhe wird die mit Sauerstoff angereicherte Luft in die Atmosphäre geleitet, so dass sie entspannt wird. Gleichzeitig ist in der unmittelbaren Nähe des Luftauslasses ein Lufteinlass positioniert, der die in die Umgebung ausgeblasene mit Sauerstoff angereicherte Luft wieder aufsaugt, um sie durch Einsatz von Kompressoren auf einen höheren Druck als den Druck in der Passagierkabine zu komprimieren. Bei diesem Vorgang erfolgt jedoch eine Vermischung mit Umgebungsluft.

Schließlich beschreiben die EP 0975518 B1 und die EP 1358911 B1 ein Klimatisierungssystem, bei dem ein Sauerstofferzeugungsgerät ("On Board Oxygen Generation System", abgekürzt "OBOGS") zur Komforterhöhung durch Einleiten von Luft mit erhöhtem Sauerstoffanteil in die Kabine verwendet wird.

### ZUSAMMENFASSUNG DER ERFINDUNG

Nachteilig bei den vorangehend beschriebenen Systemen aus dem Stand der Technik ist die Tatsache, dass entweder mit Sauerstoff angereicherte Luft durch Ausleiten in die Umgebung des Flugzeugs verschwendet wird oder das Druckniveau der in ein Inertisierungssystem eingeleiteten Luft so niedrig ist, dass Kompressoren zum Einleiten von Sauerstoff angereicherter Luft in die Kabine verwendet werden müssen. Weiterhin ist von Nachteil, dass Inertisierungssysteme aus dem Stand der Technik aufwändige Vorrichtungen zum Vorkonditionieren von Zapfluft aufweisen, die zusätzliche Kosten und Gewicht zur Folge haben.

Die Aufgabe der Erfindung ist daher, einen oder mehrere der genannten Nachteile zu verringern oder zu eliminieren. Insbesondere ist Aufgabe der Erfindung, ein Inertisierungssystem vorzuschlagen, welches möglichst ohne separate Kompressoren oder andere zusätzlichen Vorrichtungen zur Vorkonditionierung von Luft in der Lage ist, mit Stickstoff angereicherte Luft in Treibstofftanks und mit Sauerstoff angereicherte Luft in die Passagierkabine eines Flugzeugs einzuleiten.

Die Aufgabe wird gelöst durch ein Inertisierungssystem mit den Merkmalen des unabhängigen Anspruchs 1. Vorteilhafte Weiterbildungen sind den Unteransprüchen zu entnehmen.

Das erfindungsgemäße Inertisierungssystem weist mindestens ein Lufttrennungsmodul auf, welches einen Eingangsluftstrom an einem Eingang des Lufttrennungsmoduls in zwei Luftströme aufspaltet, wobei der erste Luftstrom mit Sauerstoff angereichert ist und an einem ersten Luftausgang ausgeleitet wird und der zweite Luftstrom mit Stickstoff angereichert ist und an einem zweiten Luftausgang ausgeleitet wird.

Um eine effiziente Herstellung von mit Stickstoff angereicherter Luft zu ermöglichen ist es vorteilhaft, als Luftquelle eine oder mehrere Luftquellen an im folgenden "Luftentnahmestellen" genannten Bereichen in dem Flugzeug anzuzapfen, wobei mindestens eine der Luftentnahmestellen innerhalb eines Luftaufbereitungssystems bereitgestellt wird.

Ein Luftaufbereitungssystem - das beispielsweise auch einen thermischen Prozess im Luftkreislaufverfahren durchführt - kann eine Reihe von Leitungen aufweisen, in denen Luft mit unterschiedlichen Drücken und Temperaturen transportiert wird. Der transportierte Luftstrom in einer oder mehreren dieser Leitungen kann angezapft werden, so dass ein Eingangsluftstrom für das Lufttrennungsmodul erhalten wird. Dies hat - je nach Luftentnahmestelle - den Vorteil, dass beispielsweise vorkonditionierte Luft aus dem Luftaufbereitungssystem entnommen werden könnte, so dass der Vorgang des Vorkonditionierens der in das Lufttrennungsmodul eingeleiteten Luft von dem Luftaufbereitungssystem bereits durchgeführt ist. Dadurch wären keine entsprechenden Einrichtungen in dem Inertisierungssystem erforderlich, so dass durch deren Einsparung zusätzliches Gewicht erspart bleibt. Insbesondere entfällt eine separate Entfeuchtung, Komprimierung und Dekontaminierung im Inertisierungssystem selbst. Es ist außerdem bevorzugt, dass je nach Flugphase und den damit verbundenen spezifischen Eigenschaften der Umgebungsluft eine Entfeuchtungseinheit des Luftaufbereitungssystems entweder zugeschaltet oder mit Hilfe eines Bypasses umgangen werden kann.

Es sind mehrere weitere bevorzugte Ausführungsformen des erfindungsgemäßen Inertisierungssystems denkbar, die jede für sich eine Reihe von Vorteilen gegenüber Inertisierungssystemen aus dem Stand der Technik aufweisen.

Da innerhalb der Leitungen eines Luftaufbereitungssystems im Vergleich zur Passagierkabine relativ hohe Drücke auftreten, kann eine Lufttrennung durchgeführt werden, bei der die Drücke des ersten Luftstroms und des zweiten Luftstroms höher als der Druck in der Passagierkabine sind. Dies hat zur Folge, dass eine Ausleitung von mit Sauerstoff angereicherter Luft in die Flugzeugumgebung - wie im Stand der Technik beschrieben - zum Bereitstellen einer ausreichenden Druckdifferenz zum Betrieb des Lufttrennungsmoduls nicht erforderlich ist, so dass der mit Sauerstoff angereicherte erste Luftstrom direkt oder indirekt in die Passagierkabine eingeleitet werden kann. In einer weiter bevorzugten Ausführungsform ist demnach eine Einleitung von mit Sauerstoff angereicherter Luft in eine Passagierkabine möglichst ohne Kompressoren oder dergleichen zu erreichen. Weiterhin könnte außerdem ein dem Lufttrennungsmodul vorgeschalteter Kompressor entfallen.

In einer bevorzugten Ausführungsform kann neben dem Abzapfen von Luft aus einem Luftaufbereitungssystem alternativ oder zusätzlich dazu auch Luft aus einem Zapfluftsystem ("Bleed Air") durch Anordnen mindestens einer weiteren Luftentnahmestelle an mindestens einer Zapfluftleitung entnommen werden. Dies hat zur Folge, dass konditionierte Luft aus dem Luftaufbereitungssystem nur dann entnommen werden muss, wenn die Feuchtigkeit der Zapfluft für den Betrieb eines Lufttrennungsmoduls im erfindungsgemäßen Inertisierungssystems nicht optimal ist. Dies liegt üblicherweise dann vor, wenn das Flugzeug seine stationäre Reisehöhe erreicht hat. Falls die Feuchtigkeit der Luft zu hoch sein sollte, wird bevorzugt zuerst ein Wasserabscheidungsprozess über das Luftaufbereitungssystem durchlaufen.

In einer besonders bevorzugten Ausführungsform wird die Luftentnahmestelle über eine Regeleinheit ausgewählt und entsprechende Ventile angesteuert. Die Regeleinheit könnte in einer Regeleinheit des Klimatisierungs- bzw. Luftaufbereitungssystems integriert sein und automatisch eine oder mehrere Luftentnahmestellen zum Versorgen des Lufteingangs des Lufttrennungsmoduls auswählen. Die korrekte Auswahl einer oder mehrerer Luftentnahmestellen und das Durchlaufen von Entfeuchter und dergleichen nur dann, wenn die Luftfeuchtigkeit es erfordert, senkt bei optimaler Auslegung den Treibstoffmehrverbrauch des Flugzeugs.

Eine Luftentnahmestelle ist im Hochdruckteil an einem Ausgang eines Zwischenüberhitzers eines ein Luftkreislaufverfahren durchführenden Luftaufbereitungssystems vorgesehen, die druckbeaufschlagte Luft zu dem Lufteingang des Lufttrennungsmoduls leitet. Es ist ein relativ großes Druckverhältnis zwischen der entnommenen Luft und dem Druck in der Passagierkabine realisierbar, so dass nicht nur der Stickstoff angereicherte Luftanteil aus dem Inertisierungssystem ohne weitere Hilfsmittel in die Treibstofftanks geleitet werden kann, sondern auch der Sauerstoff angereicherte Teil nicht durch separate Kompressoren komprimiert werden muss, um in die Passagierkabine geleitet zu werden. Demnach kann der Komfort in der Passagierkabine erhöht werden, indem ein Abfallprodukt eines Inertisierungssystems ohne wesentliche zusätzlichen Elemente weiterverwendet wird.

Bei einer günstigen Ausführungsform des erfindungsgemäßen Inertisierungssystems ist zumindest eine der weiteren Luftentnahmestellen an mindestens einer Zapfluftleitung angeordnet, die in Strömungsrichtung einem primären Wärmetauscher nachgeordnet ist, um der Temperaturempfindlichkeit aktuell verfügbarer Lufttrennungsmodule Rechnung zu tragen und deren Membran nicht zu beschädigen. Durch entsprechendes Ansteuern vorstehend erwähnter Ventile können auch mehrere Zapfluftleitungen angezapft werden, wobei die entsprechenden Luftströme miteinander kombiniert oder wahlweise ausschließlich verwendet werden könnten.

In einer weiteren vorteilhaften Ausführungsform ist zumindest eine der weiteren Luftentnahmestellen an mindestens einer Zapfluftleitung angeordnet, die in Strömungsrichtung einem primären Wärmetauscher vorgeordnet ist. Dies ist energetisch sinnvoller, wenn es auch ein besonders robustes Lufttrennungsmodul erfordert.

Bei einer weiteren bevorzugten Ausführungsform des erfindungsgemäßen Inertisierungssystems wird ein Kompressor am Lufteingang des Lufttrennungsmoduls zum Erhöhen des Luftdrucks eingesetzt. Dies ist insbesondere dann sinnvoll, wenn der Lufteingang des Lufttrennungsmoduls mit verbrauchter Luft aus der Kabine des Flugzeugs versorgt wird, um das Druckniveau so anzuheben, dass der mit Sauerstoff angereicherte erste Luftstrom wieder in die Kabine zurückgeleitet werden kann. Diese Ausführungsform ist zwar energetisch gesehen nicht optimal, könnte jedoch relativ leicht in bereits konzipierte Klimatisierungssysteme eines Flugzeugs nachgerüstet werden.

Hierbei kann es sinnvoll sein, bereits vorhandene Kompressoren zu verwenden, etwa falls eine Frischwasseranlage des Flugzeugs mit einem Kompressor zur Druckbeaufschlagung ausgerüstet ist, oder die Hilfsturbine (APU, "Auxiliary Power Unit").

In einer besonders bevorzugten Ausführungsform des erfindungsgemäßen Inertisierungssystems wird der mit Sauerstoff angereicherte erste Luftstrom in eine Mischereinheit zum Mischen von Frischluft und rezirkulierter Kabinenluft eingeleitet. Dadurch lassen sich bereits vorhandene Klimatisierungssysteme, die üblicherweise bereits eine Mischereinheit aufweisen, mit konstruktiv relativ geringem Aufwand deutlich aufwerten.

Weiterhin lässt sich in einer ebenfalls bevorzugten Ausführungsform der erste Luftausgang des Lufttrennungsmoduls mit der Kabine des Flugzeugs zum Einleiten von mit Sauerstoff angereicherter Luft verbinden. Dies könnte zum gezielten Einleiten von mit Sauerstoff angereicherter Luft in spezielle Bereiche der Kabine genutzt werden, so dass die Sauerstoffkonzentration lokal besonders erhöht werden kann. Andererseits könnte die Einleitung von mit Sauerstoff angereicherter Luft in die Passagierkabine auch in unmittelbarer Nähe von Luftauslässen des Klimatisierungssystems realisiert werden, so dass eine gute Durchmischung der mit Sauerstoff angereicherter Luft mit konditionierter Luft stattfindet und die Sauerstoffkonzentration im Wesentlichen homogen ist.

In einer weiteren vorteilhaften Ausführung wird bevorzugt ein relativ kleiner zusätzlicher Kompressor verwendet, um mit Sauerstoff angereicherte Luft an dem ersten Luftausgang des Lufttrennungsmoduls in einem entsprechenden Tank zwischenspeichern zu können. Dadurch wird es möglich, beispielsweise über ein steuerbares Ventil bedarfsweise mit Sauerstoff angereicherte Luft in die Kabine oder andere Systeme abzugeben.

In einer weiteren vorteilhaften Ausführungsform des erfindungsgemäßen Inertisierungssystems wird bevorzugt statt eines OBIGGS oder zusätzlich hierzu ein Sauerstofferzeugungsgerät ("On Board Oxygen Generating Sytem", abgekürzt OBOGS) eingesetzt, durch das Luft mit einem sehr hohen Sauerstoffanteil gewonnen werden kann, der nahezu im Bereich reinen Sauerstoffs liegt. Ein Abfallprodukt bei der Erzeugung von mit Sauerstoff angereicherter Luft durch dieses System ist ebenfalls ein mit Stickstoff angereicherter Luftstrom, der zur Inertisierung von Treibstofftanks verwendet werden kann. Der Einsatzzweck für die stark mit Sauerstoff angereicherte Luft könnte beispielsweise im Wiederauffüllen entleerter Sauerstoffzylinder an Bord des Flugzeugs liegen, oder aber auch in der gezielten Versorgung bestimmter Bereiche des Flugzeugs mit Sauerstoff. In Betracht könnten dafür beispielsweise ein Crew Rest Compartment, ein Flight Rest Compartment, das Cockpit, oder Anschlüsse für therapeutischen Sauerstoff und ähnliches kommen. Vorteilhaft wäre hierfür die Bereitstellung eines weiteren Kompressors. Um den Kompressor und das OBOGS energetisch günstig zu betreiben, könnte der Einlass des Kompressors mit der Passagierkabine verbunden werden, der Auslass einer mit dem Kompressor verbundenen Turbine hingegen mit der Außenströmung am Flugzeug. Dadurch kann die Druckdifferenz zwischen der Passagierkabine und der Umgebung des Flugzeugs zur Energieerzeugung genutzt werden. Ferner ist es vorteilhaft, das OBOGS bei kombinierter Verwendung eines OBOGS und eines OBIGGS mit in das OBIGGS zu integrieren.

Die Erfindung wird ferner durch ein Klimatisierungssystem gelöst, in das ein Inertisierungssystem nach den vorangehend beschriebenen Gesichtspunkten integriert ist.

### KURZE BESCHREIBUNG DER ZEICHNUNGEN

Die Erfindung wird nachfolgend anhand von Figuren näher erläutert. In den Figuren stehen gleiche Bezugszeichen für gleiche Objekte. Es zeigen:
- Fig. 1:: eine schematische Ansicht des erfindungsgemäßen Inertisierungssystems mit Luftentnahmestelle an der Turbine eines Luftaufbereitungssystems;
- Fig. 2:: eine schematische Ansicht des erfindungsgemäßen Inertisierungssystems mit Luftentnahmestelle an der Turbine eines Luftaufbereitungssystems und nachgeschaltete Aufbereitungseinheit;
- Fig. 3:: eine schematische Ansicht eines erfindungsgemäßen Inertisierungssystems mit Luftentnahmestelle an dem Kontrollventil FCK und/oder dem Hochdruckteil eines Luftaufbereitungssystems;
- Fig. 4:: eine schematische Ansicht eines erfindungsgemäßen Inertisierungssystems, das in ein Zapfluftsystem integriert ist;
- Fig. 5:: Inertisierungssystem mit Luftentnahmestelle am Ausgang des Luftaufbereitungssystems; und
- Fig. 6:: ein Schema eines integrierten Luftmanagementsystems.

### DETAILLIERTE BESCHREIBUNG VON EXEMPLARISCHEN AUSFÜHRUNGSBEISPIELEN

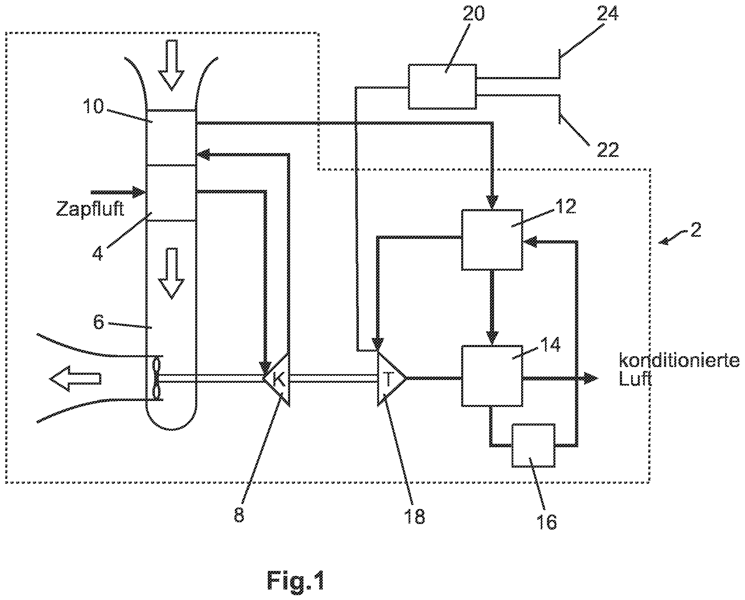

Ein erstes Ausführungsbeispiel des erfindungsgemäßen Inertisierungssystems wird in Fig. 1 gezeigt. Dort wird ein Luftaufbereitungssystem 2 dargestellt, welches dazu dient, Zapfluft aus einem Triebwerk so aufzubereiten, dass sie zur Klimatisierung einer Passagierkabine eines Flugzeugs verwendet werden kann. Die aus einer Mitteldruck-Entnahmestelle eines Triebswerks entnommene Zapfluft weist beispielsweise eine Temperatur von ungefähr 200°C und einen Druck von 3 bar auf. Sie durchströmt in der dargestellten Anordnung aus Fig. 1 den primären Wärmetauscher 4, der in einem Stauluftkanal 6 angeordnet ist. Dadurch sinkt die Temperatur der Zapfluft beispielhaft auf ungefähr 100°C. Der Druck reduziert sich hingegen nur relativ gering und beträgt hinter dem Wärmetauscher 4 noch etwa 2,9 bar. Ein Kompressor 8 komprimiert die Zapfluft, wodurch sich der Druck auf beispielhaft 4,8 bar sowie die Temperatur auf etwa 180°C erhöhen. Die komprimierte Luft erreicht schließlich einen Hauptwärmetauscher 10, der ebenfalls im Stauluftkanal 6 angeordnet ist. Nach Durchlaufen des Hauptwärmetauschers 10 steht Luft mit 4,7 bar und einer Temperatur von etwas über 40°C bereit. Nach Durchlaufen eines Zwischenüberhitzers 12 (auch als "Reheater" bezeichnet) wird der Luft durch Kondensation das gegebenenfalls enthaltene Wasser mittels eines Kondensators 14 entzogen und im Wasserabscheider 16 abgeschieden. Abschließend wird die Luft in der Turbine 18 expandiert, wobei sie sich relativ stark abkühlt. Die konditionierte Luft verlässt anschließend das Luftaufbereitungssystem 2 mit einer Temperatur von beispielhaft ca. -8°C und einem Druck von 1,1 bar.

Die aus dem Zwischenüberhitzer 12 strömende trockene Luft, die zur Turbine 18 des Luftaufbereitungssystems 2 geleitet wird, gelangt auch zu einem Teil in ein Lufttrennungsmodul 20 (hier auch mit "OBIGGS" als Abkürzung für "On Board Inert Gas Generation System" bezeichnet), wo es in einen ersten Luftstrom 22 mit höherem Sauerstoffgehalt und einen zweiten Luftstrom 24 mit höherem Stickstoffgehalt aufgeteilt wird. Der mit Stickstoff angereicherte zweite Luftstrom 24 wird zur Inertisierung von Treibstofftanks verwendet, die in Fig. 1 nicht näher dargestellt werden.

Der mit Sauerstoff angereicherte erste Luftstrom 22 ist dazu geeignet, direkt oder indirekt in die Passagierkabine eingeleitet zu werden. Aufgrund des relativ hohen Druckniveaus der aus dem Zwischenüberhitzer 12 stammenden Luft am Lufteingang des Lufttrennungsmoduls 20 und des Drucks der Passagierkabine von ungefähr 0,8 bar wird ein relativ hohes Druckverhältnis zwischen dem Lufteingang und dem ersten Luftausgang bzw. dem zweiten Luftausgang am Lufttrennungsmodul 20 von beispielhaft größer als 5 erreicht, so dass keine weiteren zusätzlichen Kompressoren zum Einleiten des mit Sauerstoff angereicherten ersten Luftstroms 22 verwendet werden müssen. Bevorzugt wird der mit Sauerstoff angereicherte Luftstrom 22 in eine nicht näher dargestellte Mischereinheit geführt, in der sie sich mit rezirkulierter und konditionierter Luft aus dem Luftaufbereitungssystem 2 vermischt.

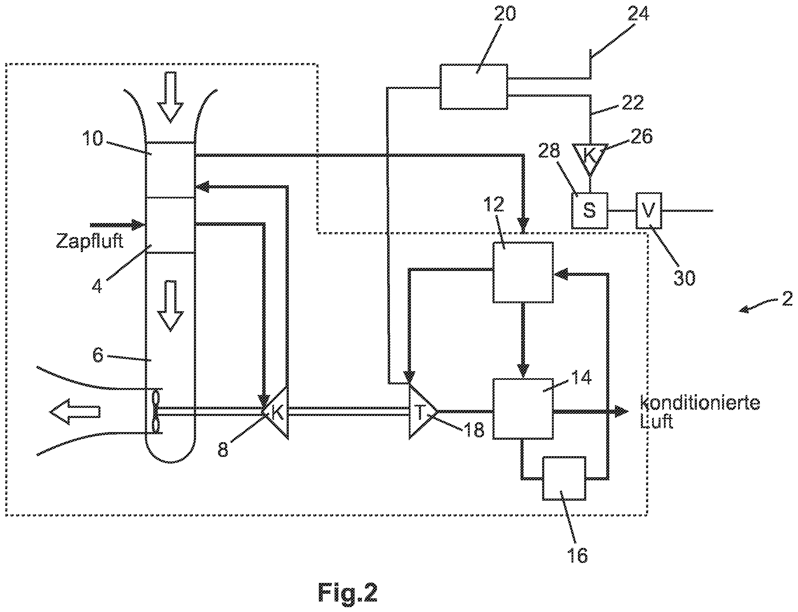

Fig. 2 zeigt ein weiteres Ausführungsbeispiel, bei dem der mit Sauerstoff angereicherte erste Luftstrom 22 komprimiert und zwischengespeichert wird, um dort zur weiteren Anwendung bereitzustehen. Dazu wird bevorzugt ein Kompressor 26 dem Lufttrennungsmodul 20 nachgeschaltet, der die mit Sauerstoff angereicherte Luft komprimiert und sie in einen Tank bzw. Speicher 28 einleitet. Die mit Sauerstoff angereicherte Luft kann dann durch Betätigen eines Ventils 30 aus dem Speicher 28 freigegeben und direkt oder indirekt in die Passagierkabine abgelassen werden.

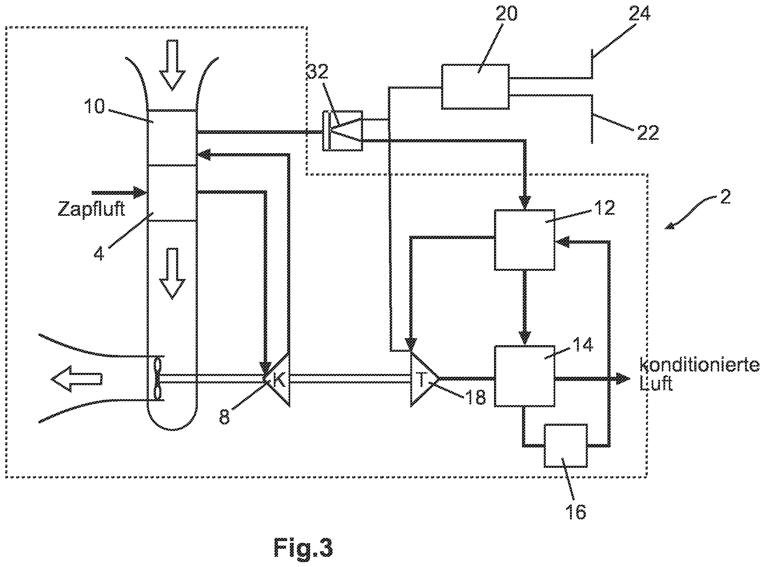

In einem weiteren Ausführungsbeispiel gemäß Fig. 3 wird der Lufteingang das Lufttrennungsmoduls 20 nicht nur durch Luft aus dem Zwischenüberhitzer 12 beaufschlagt, sondern wahlweise auch durch Zapfluft aus einem oder mehreren Triebwerken, die den Hauptwärmetauscher 10 durchlaufen hat. Die Versorgung des Lufttrennungsmoduls 20 aus den beiden unterschiedlichen Luftquellen wird durch mindestens ein bevorzugt als Schaltventil ausgeführtes Ventil 32 gesteuert. Falls der Feuchtigkeitsgehalt der Zapfluft ausreichend gering ist, wird die für die Inertisierung benötigte Luftmenge am Ventil 32 direkt zum Lufteingang des Lufttrennungsmoduls 20 geleitet. Diese Bedingung wird normalerweise immer dann erfüllt, wenn das Flugzeug seine stationäre Reisehöhe erreicht hat. Anderenfalls wird zuerst ein Wasserabscheidungsprozess über das Luftaufbereitungssystem 2 durchlaufen, so dass die aus dem Zwischenüberhitzer 12 stammende ideal geeignete getrocknete Luft in den Lufteingang des Lufttrennungsmoduls 20 geleitet wird. Ein vorgeschalteter Kompressor vor dem Lufttrennungsmodul 20 wäre nicht erforderlich.

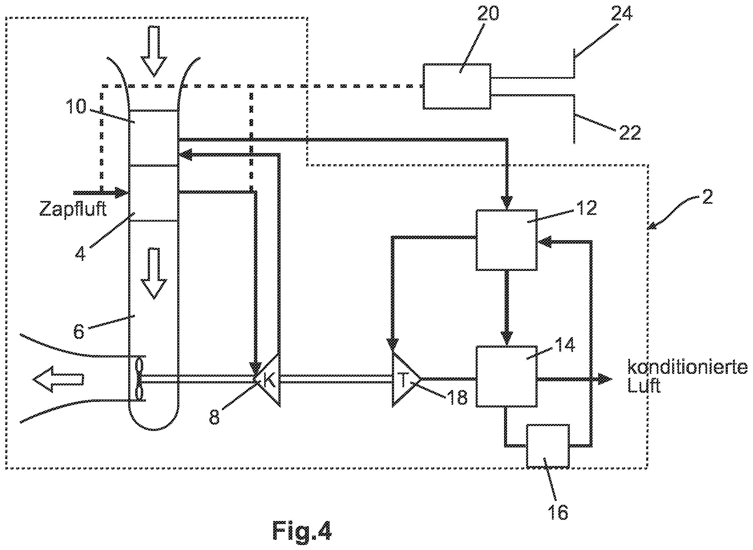

Ein weiteres Ausführungsbeispiel wird in Fig. 4 dargestellt. Dort wird das Lufttrennungsmodul 20 direkt mittels Zapfluft vom Triebwerk beaufschlagt, wobei die Zapfluft wahlweise vor oder nach dem primären Wärmetauscher 4 entnommen und in den Lufteingang des Lufttrennungsmoduls 20 geleitet wird. Nach dem heutigen Stand der Technik wäre es am sinnvollsten, das Lufttrennungsmodul 20 nach einem Ozonkonverter und nach dem primären Wärmetauscher 4 zu integrieren, um der Temperatur- und Ozonempfindlichkeit heutiger auf Zeolithmembranen oder dergleichen basierenden Bauweisen beruhenden Lufttrennungsmodulen Rechnung zu tragen. Bei entsprechender technologischer Weiterentwicklung wäre jedoch auch eine Integration vor dem primären Wärmetauscher 4 und gegebenenfalls vor einem Ozonkonverter denkbar. Wie bereits vorangehend geschildert, wäre auch eine Zapfluftentnahme aus mehreren Triebwerken gleichzeitig möglich, wobei zwischen verschiedenen Eingangsluftströmen per Ventil gewählt werden könnte oder verschiedene Eingangsluftströme kombiniert werden könnten. Ein vorgeschalteter Kompressor vor dem Lufttrennungsmodul 20 wäre nicht erforderlich.

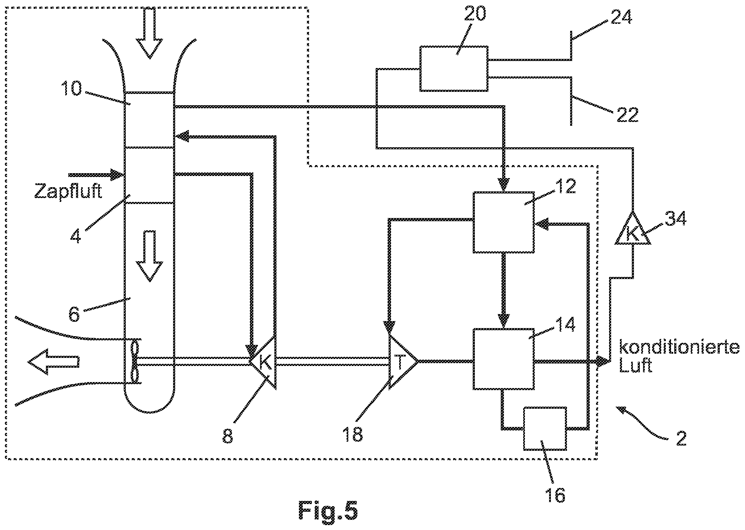

Ein weiteres Ausführungsbeispiel wird in Fig. 5 gezeigt. In dieser Variante wird konditionierte Luft am Ausgang des Luftaufbereitungssystems 2 entnommen und in den Lufteingang des Lufttrennungsmoduls 20 geleitet. Aufgrund des niedrigen Drucks am Ausgang des Luftaufbereitungssystems 2 muss die Luft in einem zusätzlichen Kompressor 34 komprimiert werden, so dass ein entsprechend hohes Druckverhältnis zwischen dem Lufteingang des Lufttrennungsmoduls 20 und dem ersten Luftstrom 22 erreicht werden kann, so dass ein Einleiten des mit Sauerstoff angereicherten ersten Luftstroms 22 in die Kabine möglich wird. Dieses Ausführungsbeispiel ist zwar energetisch betrachtet relativ ungünstig im Vergleich zu den übrigen Ausführungsbeispielen, jedoch dürfte es am einfachsten zu integrieren oder gegebenenfalls in schon bestehende Systeme nachzurüsten sein.

Die beschriebenen Ausführungsbeispiele für die Integration eines erfindungsgemäßen Inertisierungssystems sind prinzipiell auch dann realisierbar, wenn die Zapfluft nicht von einem Triebwerk, sondern von einem Kompressor und/oder einem Hilfsaggregat, zum Beispiel der APU ("Auxiliary Power Unit") bereitgestellt wird. In einer Ausführung, die vorzugsweise aber nicht ausschließlich bei Systemen zum Einsatz kommen kann, bei denen die Zapfluft von einem der Triebwerke bereitgestellt wird, besteht darin, das Inertisierungssystem direkt mit dem Hochdruckanschluss eines Triebwerks zu verbinden. Hierzu wäre jedoch eine weitergehende Änderung der Architektur des Zapfluftsystems erforderlich.

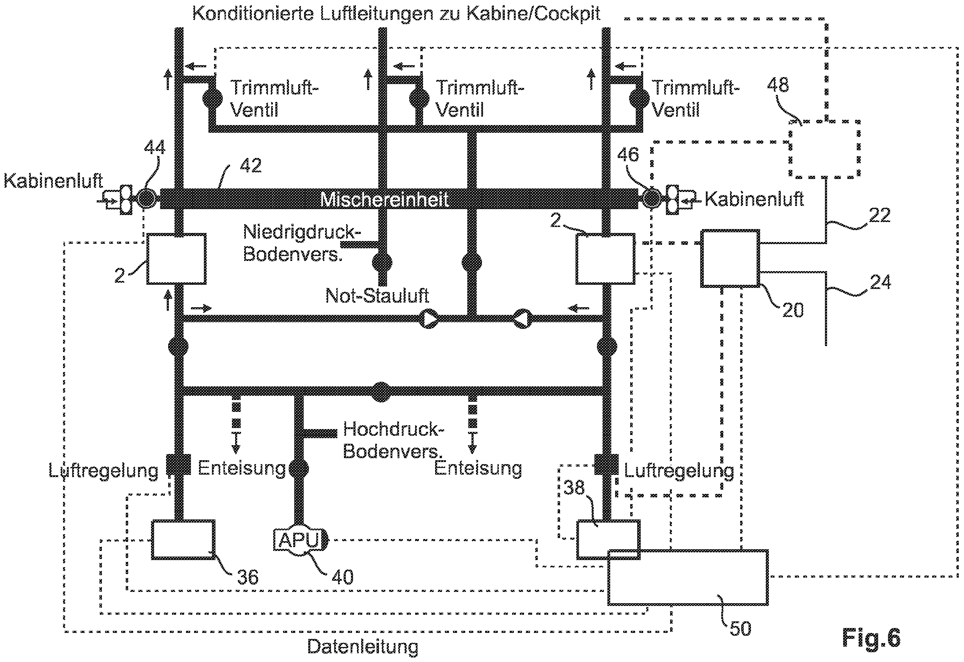

In Fig. 6 ist eine schematische Darstellung eines Klimatisierungssystems dargestellt, das ein erfindungsgemäßes Inertisierungssystem beinhaltet. Das gezeigte Klimatisierungssystem enthält hier beispielhaft zwei Luftaufbereitungssysteme 2, die von zwei Luftquellen 36 und 38 mit druckbeaufschlagter Luft versorgt werden. Zusätzlich hierzu könnte eine dritte Luftquelle 40 angeordnet sein, die beispielsweise durch eine APU realisiert wird. Die drei Luftquellen 36 bis 40 sind an ein Leitungssystem 42 angeschlossen, das mit verschiedenen Überströmventilen und Sicherheitsvorkehrungen ausgerüstet ist, auf die im weiteren nicht im Detail eingegangen wird. Die Luftaufbereitungssysteme 2 bereiten hier beispielsweise die frische Umgebungsluft aus den Luftquellen 36 bis 40 wie im Stand der Technik üblich im Luftkreislaufverfahren auf und leiten die so konditionierte Luft in eine Mischereinheit 42. Zusätzlich hierzu leiten Rezirkulationsgebläse 44 und 46 einen Anteil verbrauchter Kabinenluft in die Mischereinheit 42 ein, so dass in einem Verhältnis von ungefähr 50:50 oder 60:40 Frischluft und verbrauchte Luft der Passagierkabine wieder zugeführt werden kann.

An das gezeigte Klimatisierungssystem angeschlossen ist ein Lufttrennungsmodul 20, welches beispielhaft von einem der beiden Luftaufbereitungssysteme 2 mit Luft versorgt wird. Alternativ dazu kann das Lufttrennungsmodul 20 direkt von beispielhaft der Luftquelle 38 mit Luft versorgt werden. Durch den vorangehend bereits näher beschriebenen Aufbau ist das Lufttrennungsmodul 20 in der Lage, den Eingangsluftstrom aufzuspalten in einen ersten Luftstrom 22, der mit Sauerstoff angereichert ist und einen zweiten Luftstrom 24, der mit Stickstoff angereichert ist. Der mit Sauerstoff angereicherte erste Luftstrom 22 kann durch ein zusätzliches Aufbereitungssystem 48 so konditioniert werden, dass der mit Sauerstoff angereicherte erste Luftstrom 22 direkt in die Passagierkabine eingeleitet werden könnte. Alternativ dazu kann der mit Sauerstoff angereicherte erste Luftstrom 22 aus dem Aufbereitungssystem 48 über die Mischereinheit 42 der in die Kabine strömenden Luft zugemischt werden.

Das dargestellte Klimatisierungssystem weist ferner eine Regeleinheit 50 auf, die auch dazu geeignet sein könnte, das erfindungsgemäße Inertisierungssystem zu überwachen und anzusteuern, so dass der mit Stickstoff angereicherte zweite Luftstrom 24 in die Treibstofftanks geleitet wird, der Sauerstoffanteil innerhalb der Passagierkabine gezielt erhöht und auf einem entsprechenden Niveau gehalten werden kann oder der mit Sauerstoff angereicherte erste Luftstrom 22 aus dem Flugzeug in die Umgebung befördert werden kann. Ferner sollte die Regeleinheit 50 auch dazu eingerichtet sein, abhängig von der jeweiligen Flugphase des Flugzeugs und/oder den Umgebungsbedingungen eine oder mehrere Luftquellen bzw. Luftentnahmestellen innerhalb des Flugzeugs auszuwählen und entsprechend mit dem Lufteingang des Lufttrennungsmoduls 20 zu verbinden. Dabei ist eine solche Ausführung nicht auf eines der Ausführungsbeispiele des erfindungsgemäßen Inertisierungssystems beschränkt, sondern ist bevorzugt für alle denkbaren Varianten vorzusehen.

Das erfindungsgemäße Inertisierungssystem hat einige Vorteile gegenüber Inertisierungssystemen aus dem Stand der Technik. Zunächst wird das Lufttrennungsmodul 20 lediglich mit trockener Luft versorgt, so dass separate Wasserabscheider und andere Vorkonditionierungseinrichtungen im Inertisierungssystem selbst entfallen. Das Druckverhältnis zwischen Eingangsluftstrom und dem ersten Luftstrom 22 bzw. dem zweiten Luftstrom 24 ist relativ hoch und zudem auch unabhängig von der jeweiligen Flughöhe. Dadurch verbessert sich die Leistungsfähigkeit des Inertisierungssystems, so dass es System kosten- und gewichtsoptimiert ausgelegt werden kann. Bei einer herkömmlichen Ausführung aus dem Stand der Technik wäre das Druckverhältnis von der Flughöhe abhängig, so dass ein zusätzlicher Kompressor in dem Inertisierungssystem notwendig wäre. Ebenso wären dazu entsprechende Kontroll- und Regelorgane für die Luftaufbereitung vonnöten. Weiterhin ist ein Vorteil des erfindungsgemäßen Inertisierungssystems, dass der mit Sauerstoff angereicherte erste Luftstrom 22 weiterverwendet werden kann, etwa für Anwendungen in der Kabine. Dies ist bei herkömmlichen Ausführungen eines Inertisierungssystems nicht möglich, denn die mit Sauerstoff angereicherte Luft müsste mit der Atmosphäre außerhalb des Flugzeugs verbunden werden, um die Umgebungsbedingung von 0,2 bar zu erreichen und eine Lufttrennung im Lufttrennungsmodul überhaupt in Gang zu bringen.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichen:

- 2: Luftaufbereitungssystem
- 4: primärer Wärmetauscher
- 6: Stauluftkanal
- 8: Kompressor
- 10: Hauptwärmetauscher
- 12: Zwischenüberhitzer ("Reheater")
- 14: Kondensator
- 16: Wasserabscheider
- 18: Turbine
- 20: Lufttrennungsmodul
- 22: mit Sauerstoff angereicherter erster Luftstrom
- 24: mit Stickstoff angereicherter zweiter Luftstrom
- 26: Kompressor
- 28: Zwischenspeicher
- 30: Ventil
- 32: Ventil
- 34: Kompressor
- 36: Luftquelle
- 38: Luftquelle
- 40: Luftquelle
- 42: Mischereinheit
- 44: Rezirkulationsgebläse
- 46: Rezirkulationsgebläse
- 48: Aufbereitungssystem
- 50: Regelungseinheit

## Patentansprüche

1. Inertisierungssystem für ein Flugzeug, aufweisend:
- mindestens ein Luftkreislauf-Luftaufbereitungssystem (2); und
- mindestens ein Lufttrennungsmodul (20) mit mindestens einem Lufteingang, einem ersten Luftausgang und einem zweiten Luftausgang, wobei das Lufttrennungsmodul (20) dazu eingerichtet ist, einen Eingangsluftstrom in einen ersten Luftstrom (22) und einen zweiten Luftstrom (24) aufzuspalten, wobei das Lufttrennungsmodul (20) als ein Inert-Gas-Erzeugungssystem ausgebildet ist;
wobei der erste Luftstrom (22) gegenüber dem Eingangsluftstrom mit Sauerstoff angereichert ist und am ersten Luftausgang ausgeleitet wird;
wobei der zweite Luftstrom (24) gegenüber dem Eingangsluftstrom mit Stickstoff angereichert ist und am zweiten Luftausgang ausgeleitet wird;
wobei der Lufteingang mit einer oder mehreren Luftentnahmestellen verbunden ist; **dadurch gekennzeichnet, dass** mindestens eine der Luftentnahmestellen in einem Hochdruckbereich
an einem Ausgang eines Zwischenüberhitzers (12) innerhalb des mindestens einen Luftaufbereitungssystems (2) bereitgestellt ist, so dass das Druckniveau an dem mindestens einen Lufteingang so hoch ist, dass der erste Luftstrom (22) ohne Einsatz eines weiteren Kompressors in eine zu klimatisierende und druckbeaufschlagte Passagierkabine geleitet werden kann.

2. Inertisierungssystem nach Anspruch 1,
**gekennzeichnet durch** mindestens einen Zapfluftleitungsabschnitt, der mit einer Zapfluftleitung verbindbar ist, wobei mindestens eine weitere Luftentnahmestelle an dem mindestens einen Zapfluftleitungsabschnitt bereitgestellt ist.

3. Inertisierungssystem nach Anspruch 2,
**dadurch gekennzeichnet, dass** sich der Lufteingang steuerbar mit einer oder mehreren Luftentnahmestellen in dem mindestens einen Luftaufbereitungssystem (2) und/oder an der mindestens einen Zapfluftleitung verbinden lässt.

4. Inertisierungssystem nach einem der vorhergehenden Ansprüche,
**dadurch gekennzeichnet, dass** das Inertisierungssystem mindestens ein Ventil (32) aufweist, das dazu eingerichtet ist, den Lufteingang des Inertisierungssystems mit unterschiedlichen Luftentnahmestellen zu verbinden.

5. Inertisierungssystem nach einem der Ansprüche 2 bis 5,
**dadurch gekennzeichnet, dass** die mindestens eine weitere Luftentnahmestelle an einem Zapfluftleitungsabschnitt positioniert ist, die in Strömungsrichtung einem Wärmetauscher (4) nachgeordnet ist.

6. Inertisierungssystem nach einem der Ansprüche 2 bis 4,
**dadurch gekennzeichnet, dass** die mindestens eine weitere Luftentnahmestelle an einem Zapfluftleitungsabschnitt positioniert ist, die in Strömungsrichtung einem Wärmetauscher (4) vorgeordnet ist.

7. Inertisierungssystem nach einem der vorhergehenden Ansprüche,
**dadurch gekennzeichnet, dass** am Lufteingang des Lufttrennungsmoduls (20) ein Kompressor (34) zum Erhöhen des Luftdrucks vor dem Lufttrennungsmodul (20) angeordnet ist.

8. Inertisierungssystem nach einem der vorhergehenden Ansprüche,
**dadurch gekennzeichnet, dass** sich der erste Luftausgang mit einer Mischereinheit (32) zum Mischen von Frischluft und rezirkulierter Kabinenluft verbinden lässt.

9. Inertisierungssystem nach einem der Ansprüche 1 bis 7,
**dadurch gekennzeichnet, dass** sich der erste Luftausgang mit der Passagierkabine zum Einleiten von mit Sauerstoff angereicherter Luft verbinden lässt.

10. Inertisierungssystem nach einem der vorhergehenden Ansprüche,
**dadurch gekennzeichnet, dass** sich zum Erhöhen des Sauerstoffanteils in der mit Sauerstoff angereicherten Luft der erste Luftausgang mit einer zusätzlichen Einrichtung zum Erzeugen von mit Sauerstoff angereicherter Luft verbinden lässt, die mit Sauerstoff angereicherte Luft an einem dritten Luftausgang abgibt.

11. Inertisierungssystem nach Anspruch 10,
**dadurch gekennzeichnet, dass** sich der dritte Luftausgang mit Sauerstoff verwendenden Einrichtungen verbinden lässt.

12. Verwendung eines Inertisierungssystems nach einem der Ansprüche 1-11 in einem Flugzeug.

13. Klimatisierungssystem für ein Flugzeug, aufweisend
- mindestens ein Luftkreislauf-Luftaufbereitungssystem (2),
- mindestens eine Luftquelle und
- mindestens ein Inertisierungssystem nach einem der Ansprüche 1-11.

14. Flugzeug mit einem Klimatisierungssystem nach Anspruch 13.

## Claims

1. An inerting system for an aircraft comprising:
- at least one air-cycle air processing system (2); and
- at least one air separation module (20) with at least one air inlet, a first air outlet and a second air outlet, wherein the air separation module (20) is adapted for splitting an input air flow into a first air flow (22) and a second air flow (24), wherein the air separation module (20) is realized as an inert gas generation system;
wherein the first air flow (22) is enriched with oxygen in comparison with the input air flow and discharged at the first air outlet;
wherein the second air flow (24) being enriched with nitrogen in comparison with the input air flow and discharged at the second air outlet;
wherein the air inlet is connectable to one or more air extraction points;
**characterized in that** at least one of the air extraction points is provided in a high pressure section of the at least one air processing system (2) at an outlet of an intermediate superheater, such that the pressure level at the at least one air inlet is so high, that the first air flow (22) is routable into a pressurized passenger cabin to be air-conditioned without use of a further compressor.

2. The inerting system of claim 1,
**characterized by** at least one bleed air line section, which is connectable to a bleed air line, wherein at least one additional air extraction point is provided on the at least one bleed air line section.

3. The inerting system of claim 2,
**characterized in that** the air inlet is connectable to one or more air extraction points in the at least one air processing system (2) and/or on the at least one bleed air line in a controllable fashion.

4. The inerting system of one of the preceding claims,
**characterized in that** the inerting system comprises at least one valve (32) that is adapted for connecting the air inlet of the inerting system with different air extraction points.

5. The inerting system of one of claims 2 to 4,
**characterized in that** the at least one additional air extraction point is positioned on a bleed air line section that is arranged downstream of a heat exchanger (4) referred to the flow direction.

6. The inerting system of one of claims 2 to 5,
**characterized in that** the at least one additional air extraction point is positioned on a bleed air line section that is arranged upstream of a heat exchanger (4) referred to the flow direction.

7. The inerting system of one of the preceding claims,
**characterized in that** a compressor (34) for increasing the air pressure upstream of the air separation module (20) is arranged at the air inlet of the air separation module (20).

8. The inerting system of one of the preceding claims,
**characterized in that** the first air outlet is connectable to a mixing unit (32) for mixing fresh air and recirculated cabin air.

9. The inerting system of one of claims 1 to 7,
**characterized in that** the first air outlet is connectable to the passenger cabin in order to introduce air enriched with oxygen.

10. The inerting system of one of the preceding claims,
**characterized in that** the first air outlet is connectable to an additional device for generating air enriched with oxygen that delivers air enriched with oxygen at a third air outlet in order to increase the oxygen content in the air enriched with oxygen.

11. The inerting system of claim 10,
**characterized in that** the third air outlet is connectable to devices using oxygen.

12. The use of an inerting system of one of claims 1-11 in an aircraft.

13. An environmental control system for an aircraft, comprising
- at least one air-cycle air processing system (2),
- at least one air source, and
- at least one inerting system of one of claims 1-11.

14. An aircraft with an environmental control system of claim 13.

## Revendications

1. Système d'inertisation pour un avion, présentant :
- au moins un système de recyclage d'air (2) pour un circuit de ventilation ; et
- au moins un module de séparation d'air (20) comportant au moins une entrée d'air, une première sortie d'air et une deuxième sortie d'air, le module de séparation d'air (20) étant agencé pour fractionner un écoulement d'air entrant en un premier écoulement d'air (22) et un second écoulement d'air (24), le module de séparation d'air (20) étant configuré sous la forme d'un système de production de gaz inerte ;
dans lequel le premier écoulement d'air (22) est enrichi en oxygène par rapport à l'écoulement d'air entrant et est sorti au niveau de la première sortie d'air ;
dans lequel le second écoulement d'air (24) est enrichi en azote par rapport à l'écoulement d'air entrant et est sorti au niveau de la deuxième sortie d'air ;
dans lequel l'entrée d'air est reliée à un ou plusieurs points de prélèvement d'air ; **caractérisé en ce qu'**au moins un des points de prélèvement d'air est prévu dans une zone haute pression au niveau d'une sortie d'un surchauffeur intermédiaire (12) à l'intérieur de l'au moins un système de recyclage d'air (2) de sorte que le niveau de pression au niveau de l'au moins une entrée d'air est si élevé que le premier écoulement d'air (22) peut être dirigé dans une cabine passagers sous pression et à climatiser sans l'intervention d'un autre compresseur.

2. Système d'inertisation selon la revendication 1,
**caractérisé par** au moins une portion de conduite d'air de prélèvement qui peut être reliée à une conduite d'air de prélèvement, dans lequel au moins un autre point de prélèvement d'air est prévu au niveau de l'au moins une portion de conduite d'air de prélèvement.

3. Système d'inertisation selon la revendication 2,
**caractérisé en ce que** l'entrée d'air peut être reliée de manière commandable à un ou plusieurs points de prélèvement d'air dans l'au moins un système de recyclage d'air (2) et/ou au niveau de l'au moins une conduite d'air de prélèvement.

4. Système d'inertisation selon une des revendications précédentes,
**caractérisé en ce que** le système d'inertisation présente au moins une soupape (32) qui est agencée pour relier l'entrée d'air du système d'inertisation à différents points de prélèvement d'air.

5. Système d'inertisation selon une des revendications 2 à 4,
**caractérisé en ce que** l'au moins un autre point de prélèvement d'air est positionné au niveau d'une portion de conduite d'air de prélèvement qui est disposée dans le sens de l'écoulement en aval d'un échangeur de chaleur (4).

6. Système d'inertisation selon une des revendications 2 à 5,
**caractérisé en ce que** l'au moins un autre point de prélèvement d'air est positionné au niveau d'une portion de conduite d'air de prélèvement qui est disposée dans le sens de l'écoulement en amont d'un échangeur de chaleur (4).

7. Système d'inertisation selon une des revendications précédentes,
**caractérisé en ce que**, au niveau de l'entrée d'air du module de séparation d'air (20), un compresseur (34) est disposé pour augmenter la pression de l'air en amont du module de séparation d'air (20).

8. Système d'inertisation selon une des revendications précédentes,
**caractérisé en ce que** la première sortie d'air peut être reliée à une unité de mélange (32) pour mélanger l'air frais et l'air de recirculation de la cabine.

9. Système d'inertisation selon une des revendications 1 à 7,
**caractérisé en ce que** la première sortie d'air peut être reliée à la cabine passagers pour introduire de l'air enrichi en oxygène.

10. Système d'inertisation selon une des revendications précédentes,
**caractérisé en ce que**, pour augmenter la teneur en oxygène dans l'air enrichi en oxygène, la première sortie d'air peut être reliée à ue autre moyen de production d'air enrichi en oxygène qui redistribu l'air enrichi en oxygène au niveau d'une troisième sortie d'air.

11. Système d'inertisation selon la revendication 10,
**caractérisé en ce que** la troisième sortie d'air peut être reliée à des moyens utilisant de l'oxygène.

12. Utilisation d'un système d'inertisation selon une des revendications 1 à 11 dans un avion.

13. Système de climatisation pour un avion, présentant :
- au moins un système de recyclage d'air (2) pour un circuit de ventilation,
- au moins une source d'air et
- au moins un système d'inertisation selon une des revendications 1 à 11.

14. Avion comportant un système de climatisation selon la revendication 13.
